# EUROPÄISCHE PATENTSCHRIFT

(11) **EP 2 776 534 B1**
(45) Veröffentlichungstag und Bekanntmachung des Hinweises auf die Patenterteilung: **10.01.2018**
(21) Anmeldenummer: 12783897.7
(22) Anmeldetag: 07.11.2012
(51) Int. Cl.: C09K 11/74, C09K 11/77, C03C 3/095, C03C 4/12, C03C 8/02, C03C 8/08, D21H 21/30, G01N 21/01, G01N 21/64, D21H 21/48

(54) **SPEKTRALER LUMINESZENZSTANDARD FÜR DEN NAHINFRAROTBEREICH**
SPECTRAL LUMINESCENCE STANDARD FOR THE NEAR INFRARED REGION
ÉTALON DE LUMINESCENCE SPECTRAL DANS LE DOMAINE DU PROCHE INFRAROUGE

(30) Priorität: 09.11.2011 DE 102011118057
(43) Veröffentlichungstag der Anmeldung: 17.09.2014
(73) Patentinhaber: Giesecke+Devrient Currency Technology GmbH, 81677 München (DE)
(72) Erfinder: KECHT, Johann, 81677 München (DE); STOCK, Kai Uwe, 82031 Grünwald (DE)
(86) Internationale Anmeldenummer: PCT/EP2012/004625
(87) Internationale Veröffentlichungsnummer: WO 2013/068102

(56) Entgegenhaltungen:
- WO-A1-2006/005498
- US-A- 4 598 205
- US-A1- 2010 171 076
- US-A1- 2010 304 059

## Beschreibung

Die Erfindung betrifft einen spektralen Lumineszenzstandard, der breitbandig im nahen Infrarotbereich emittiert, ein Verfahren zur Herstellung des Lumineszenzstandards sowie Kalibriermedien zum Kalibrieren von optischen Prüfgeräten bzw. Sensoren, die den spektralen Lumineszenzstandard aufweisen oder denen dieser zugeordnet ist.

Wertdokumente, wie Banknoten, Schecks, Ausweise, Kreditkarten, Urkunden und dergleichen werden zur Echtheitssicherung häufig mit lumineszierenden Sicherheitsmerkmalen ausgestattet. Diese Sicherheitsmerkmale werden im Laufe der Lebensdauer eines Wertdokuments in der Regel mehrmals überprüft.

Bereits bei der Herstellung der Wertdokumente bzw. der Sicherheitspapiere, die zur Herstellung der Wertdokumente verwendet werden, muss die korrekte Einbringung oder Aufbringung der Lumineszenzstoffe überprüft werden. Dies geschieht typischerweise durch Installieren eines Lumineszenzprüfgeräts an einer geeigneten Stelle der Produktionslinie einer Sicherheitspapier-Materialbahn. Die Materialbahn wird mit Hilfe eines Transportsystems durch die verschiedenen Produktionsabschnitte transportiert und dabei auch an dem ortsfest installierten Lumineszenzprüfgerät vorbeitransportiert, das während des Vorbeitransportierens Messsignale von der Materialbahn detektiert.

Im Umlauf befindliche Wertdokumente, insbesondere Banknoten, werden in Blattgutbearbeitungsmaschinen auf ihre Echtheit und/ oder ihren Zustand geprüft, unter anderem auch auf ihre lumineszierenden Echtheitsmerkmale.

Die Wertdokumente werden dazu an einem entsprechenden Lumineszenzprüfgerät vorbeigeführt, das die von dem Wertdokument emittierten Lumineszenzsignale detektiert.

Dabei ergibt sich jedoch das Problem, dass die detektierten Lumineszenzsignale geräteabhängigen Einflüssen unterworfen sind, die sich auch noch im Laufe der Zeit verändern können, so dass ein Vergleich von Lumineszenzmessungen, die mit verschiedenen Geräten erhalten wurden, nicht möglich ist. Benötigt werden daher definierte Referenzsysteme, die bestimmte Sollwertvorgaben liefern, sogenannte Lumineszenzstandards. Die Lumineszenzprüfgeräte können mit Hilfe der Lumineszenzstandards kalibriert bzw. justiert werden, so dass die Messungen unterschiedlicher Geräte, und zu unterschiedlichen Zeiten, miteinander vergleichbar werden.

Zur Kalibrierung eines Lumineszenz-Prüfgeräts, das entlang des Transportwegs einer Materialbahn, beispielsweise einer Materialbahn für Sicherheitspapiere oder Wertdokumente, angeordnet ist und zur Prüfung der Materialbahn bei deren Herstellung eingesetzt wird, wird üblicherweise ein Kalibriermedium in die Messebene des Prüfgeräts eingebracht, um mit dem Prüfgerät einen Kalibrier-Messwert des Kalibriermediums zu detektieren. Das Kalibriermedium kann zu diesem Zweck - während einer Unterbrechung der Materialbahnprüfung - manuell an das Prüfgerät angelegt werden, so dass temporär anstelle der Materialbahn das Kalibriermedium in die Messebene des Prüfgeräts eingebracht ist. Das Kalibriermedium ist ein Lumineszenzstandard oder enthält einen Lumineszenzstandard. Dem Kalibriermedium ist ein bestimmter Sollwert zugeordnet, den das Prüfgerät im Idealfall bei einer Messung des Kalibriermediums detektiert. Im Realfall wird häufig eine Abweichung des tatsächlichen Messwerts von diesem Sollwert festgestellt. Dann muss das Prüfgerät neu eingestellt werden, so dass der Messwert des Prüfgeräts dem zu dem Kalibriermedium gehörenden Sollwert entspricht. Alternativ zu einem manuellen Anlegen des Kalibriermediums an das Prüfgerät kann das Kalibriermedium auch an dem Prüfgerät vorbeitransportiert werden, so dass eine Vielzahl von Kalibrier-Messwerten des Kalibriermediums detektiert werden kann und für die Kalibrierung des Prüfgeräts ein Durchschnittswert aus diesen Messwerten verwendet werden kann. Dies erlaubt eine genauere Kalibrierung.

Bei Blattgutbearbeitungsmaschinen wie Vorrichtungen zur Wertdokumentbearbeitung, in denen beispielsweise Banknoten auf Echtheit geprüft werden, werden die Wertdokumente in der Vorrichtung üblicherweise an Sensoren, beispielsweise Lumineszenzsensoren, vorbeitransportiert. Um die Sensoren zu kalibrieren wird anstelle der Wertdokumente ein geeignetes Kalibriermedium an den Sensoren vorbeitransportiert, wobei die Sensoren Messwerte des Kalibriermediums aufnehmen. Das Kalibriermedium ist ein Lumineszenzstandard oder enthält einen Lumineszenzstandard. Die Messwerte werden mit Sollwerten verglichen, die dem Kalibriermedium zugeordnet sind. Falls die Messwerte von den Sollwerten abweichen, muss der Sensor justiert werden, bis er bei einer neuerlichen Messung des Kalibriermediums zumindest näherungsweise die Sollwerte liefert. Dann kann der Sensor wieder zur Prüfung von Wertdokumenten verwendet werden.

Die Anforderungen an einen Lumineszenzstandard variieren je nach Anwendungszweck. Soll ein Lumineszenzstandard als Kalibriermedium zur Kalibrierung von Sensoren, die zur Prüfung von Blattgut eingesetzt werden, angewendet werden, sollte der Lumineszenzstandard in Form eines blattförmigen Kalibriermediums bereitgestellt werden können. Auch hinsichtlich der optischen Eigenschaften gibt es unterschiedliche Anforderungen. Beispielsweise ist grundsätzlich zu unterscheiden zwischen Absorptionsstandards, die Referenzsysteme für Messungen des Absorptionsverhaltens lumineszierender Substanzen darstellen, und Lumineszenzstandards, die Referenzsysteme für Messungen des Emissionsverhaltens lumineszierender Substanzen darstellen. Wellenlängenstandards (Referenzsysteme zur Überprüfung der Wellenlängenrichtigkeit) müssen möglichst viele, schmale Banden aufweisen, während spektrale Standards möglichst breite, glatte und unstrukturierte Spektren aufweisen müssen. Für alle Standards gilt, dass sie eine hohe Homogenität und Isotropie und eine geringe Temperaturabhängigkeit aufweisen sollten, langzeitstabil und photostabil sein sollten, und mit möglichst hoher Quantenausbeute arbeiten sollten.
Der Stand der Technik bietet breitbandig emittierende spektrale Lumineszenzstandards für den sichtbaren Bereich, jedoch kaum Substanzen, die im nahen Infrarotbereich breitbandig und unstrukturiert emittieren. Der nahe Infrarotbereich (NIR-Bereich) ist der Wellenlängenbereich von 760 nm bis 2500 nm.

US4598205 A offenbart eine Mischung von Bismut- und Lanthanoxiden in einer lumineszenten Granatstruktur. Das Material findet Verwendung als Sicherheitsmerkmal für Wertpapiere.

Für die Echtheitssicherung von Wertdokumenten werden unter anderem Substanzen verwendet, die im Bereich zwischen 1000 nm und 1500 nm emittieren. Für diesen Bereich stehen jedoch bisher keine spektralen Lumineszenzstandards zur Verfügung, d.h. Lumineszenzstandards, die bei Bestrahlung mit Anregungslicht einer geeigneten Wellenlänge breitbandig und unstrukturiert Lumineszenz emittieren, insbesondere keine spektralen Lumineszenzstandards, die zur Verwendung als Lumineszenzstandards zur Kalibrierung von Lumineszenzsensoren bzw. Lumineszenzprüfgeräten in Blattgutbearbeitungsmaschinen bzw. Papiermaschinen geeignet sind. Aufgabe der vorliegenden Erfindung ist es daher, einen spektralen Lumineszenzstandard für den Bereich 1000 nm bis 1500 nm bereitzustellen, d.h. einen Lumineszenzstandard, der mindestens in dem Bereich von 1000 nm bis 1500 nm breite, unstrukturierte Lumineszenzemissionen aufweist.

Aufgabe der Erfindung ist es auch, ein Verfahren zur Herstellung eines derartigen Lumineszenzstandards anzugeben.

Aufgabe der Erfindung ist es darüber hinaus, ein Kalibriermedium bereitzustellen, das einen spektralen Lumineszenzstandard für den Bereich von 1000 nm bis 1500 nm aufweist und zum Kalibrieren von Prüfgeräten oder Sensoren, z.B. von Lumineszenzsensoren in Blattgutbearbeitungsmaschinen oder Lumineszenzprüfgeräten in Papiermaschinen geeignet ist.

Die Aufgabe wird gelöst durch den spektralen Lumineszenzstandard mit den Merkmalen, wie sie im Anspruch 1 angegeben sind, durch das Verfahren zur Herstellung des Lumineszenzstandards mit den Merkmalen, wie sie im Anspruch 7 angegeben sind, und durch das Kalibriermedium mit den Merkmalen, wie sie im Anspruch 10 angegeben sind. Ausgestaltungen der Erfindung sind in den jeweiligen abhängigen Ansprüchen angegeben.

Der erfindungsgemäße Lumineszenzstandard weist Bismut als Lumineszenzemitter auf. Die Lumineszenzeigenschaften von Bismut (III), das im sichtbaren Bereich emittiert, sind seit langem bekannt. Die vorliegende Erfindung verwendet jedoch nicht Bismut (III) als NIR-Lumineszenzemitter, sondern eine breitbandig im Nahinfrarotbereich (NIR-Bereich) emittierende Bi-Spezies, deren Existenz zwar grundsätzlich bekannt, aber deren genaue Identität nicht eindeutig geklärt ist. In der Fachliteratur diskutiert werden Bi⁺, Bi²⁺, Bi⁵⁺, kleinere kationische oder neutrale Bi-Cluster (z. B. Bi₂²⁺), BiO-Radikale, sowie anionische Bismut-Spezies (z. B. Bi₂⁻, Bi₂²⁻). Es gibt insbesondere Hinweise auf das Vorliegen reduzierter kationischer oder neutraler Bi-Spezies. Für die Nutzung der Eigenschaften dieser Bi-Spezies im Rahmen der vorliegenden Erfindung ist die Klärung ihrer Identität jedoch nicht erforderlich. Wesentlich ist lediglich, dass die Bismut-Spezies zuverlässig und reproduzierbar hergestellt werden kann. Geeignete Bedingungen zur Herstellung dieser NIR-aktiven Bi-Spezies (NIR-Bi) sind bekannt. Die Entstehung von NIR-aktivem Bi erfordert insbesondere hohe Temperaturen und die Stabilisierung in einer Matrix.

Der Lumineszenzstandard emittiert bei Bestrahlung mit Anregungslicht, Licht im Nahinfrarotbereich, wobei das NIR-aktive Bismut als Lumineszenzemitter wirkt. Die Lichtemission des Lumineszenzstandards im Nahinfrarotbereich stammt also nicht von einem dreiwertigen Bi(III), sondern von der oben genannten NIR-aktiven Bi-Spezies. Die spektrale Breite (FWHM) der Lichtemission im Nahinfrarotbereich der NIR-aktiven Spezies beträgt mindestens 100 nm, vorzugsweise mindestens 200 nm. Das Anregungslicht kann z.B. im sichtbaren Spektralbereich liegen oder im Nahinfrarotbereich, der energetisch oberhalb der Nahinfrarotemission der NIR-aktiven Bi-Spezies liegt.

Geeignete Matrixmaterialien sind beispielsweise Gläser, insbesondere Silicatgläser, Aluminiumsilicatgläser, Borosilicatgläser, Phosphatgläser, Germanatgläser, und neben derartigen Oxid-Gläsern auch Sulfid-Gläser. Grundsätzlich sind als Matrixbildner, d.h. Ausgangsmaterialien zur Bildung der Matrix von NIR-aktivem Bi, alle anorganischen Substanzen und Substanzgemische geeignet, aus denen sich bei Temperaturen oberhalb von etwa 900°C Materialien erschmelzen oder ersintern lassen, in denen NIR-aktives Bi stabilisiert werden kann und die für die Anregungsstrahlung und die Lumineszenzemissionsstrahlung von NIR-aktivem Bi ausreichend lichtdurchlässig sind, insbesondere optisch transparent sind. Optische Homogenität und Transparenz ist am relativ einfachsten bei Gläsern und glasartigen Materialien zu erzielen, aber dies ist kein zwingendes Erfordernis der vorliegenden Erfindung. Auch kristalline und teilkristalline Matrizes sind geeignet, solange gewährleistet ist, dass sie die im Nahinfrarotbereich breitbandig emittierende Bismut-Spezies NIR-Bi stabilisieren und ausreichende Transparenz zur Anregung und Emission der Fluoreszenzstrahlung besitzen.

Geeignete Ausgangsmaterialien (Matrixbildner) zur Herstellung des Matrixmaterials sind beispielsweise Oxide, wie sie bei der Herstellung von Gläsern üblicherweise verwendet werden. Je nach Glasart sind Hauptbestandteile der Gläser Siliciumoxid (SiO₂), Boroxid (B₂O₃), Phosphoroxid (P₂O₅), und Germaniumoxid (GeO₂). Diese Hauptbestandteile liegen in der Regel in Kombination mit mehreren Nebenbestandteilen in unterschiedlichen Mengenanteilen vor. Unter einem "Hauptbestandteil" wird hierhin der Bestandteil verstanden, der, in Mol% seines Oxids, den relativ größten Anteil an der Gesamtzusammensetzung hat. Diverse Komponenten können in einigen Gläsern als Hauptbestandteil, in anderen aber als Nebenbestandteil dienen. Boroxid beispielsweise bildet in Kombination mit Siliciumoxid Borosilicatgläser, und Aluminiumoxid bildet in Kombination mit Siliciumoxid Aluminiumsilicatgläser.

Bei der vorliegenden Erfindung enthalten Silicatgläser bzw. Aluminiumsilicatgläser etwa 50 bis 90 Mol% SiO₂ und 0 bis 40 Mol% Al₂O₃. Boratgläser und Phosphatgläser enthalten etwa 30 bis 90 Mol% B₂O₃ bzw. etwa 30 bis 90 Mol% P₂O₅. Außerdem können als Nebenbestandteile Alkalimetalloxide und/oder Erdalkalimetalloxide und/oder Seltenerdmetalloxide enthalten sein.

Alkalimetalle, insbesondere Lithium, steigern die Lumineszenzintensität von NIR-aktivem Bi. Li₂O ist in den Matrixmaterialien der vorliegenden Erfindung bevorzugt in Mengenanteilen von bis zu 15 Mol% enthalten, während Na₂Ound K₂O in bestimmten Matrixmaterialzusammensetzungen die Lumineszenzintensität schwächen können und bevorzugt in Mengenanteilen von jeweils weniger als 5 Mol% verwendet werden.

Erdalkalimetalle verbessern generell die Eigenschaften von Gläsern, aber MgO, CaO, SrO und BaO können die Lumineszenzeigenschaften, d.h. die Emissionsstärke, von NIR-aktivem Bi unter Umständen schwächen und werden deshalb ebenfalls in Mengenanteilen des Matrixmaterials von bevorzugt weniger als 5 Mol% (Mg, Ca, Sr, Ba)O eingesetzt.

Ein bevorzugter Nebenbestandteil der Matrixmaterialien sind bei der vorliegenden Erfindung Seltenerdmetalle, insbesondere Neodym (Nd), Dysprosium (Dy), Holmium (Ho), Erbium (Er), Thulium (Tm), und Ytterbium (Yb). Die Seltenerdmetalle können alleine oder in Kombination verwendet werden. In den Matrizes liegen sie als dreiwertige Kationen vor und wirken als Sensibilisatoren, d.h. sie absorbieren Anregungsenergie und transferieren sie auf das NIR-aktive Bi, dessen Anregung dadurch erleichtert wird. Eine spektrale Verschiebung der Lumineszenzbande von NIR-aktivem Bi tritt dadurch nicht auf. Allerdings kann das Emissionsspektrum durch eine Dotierung der Matrizes mit geeigneten Seltenerdmetallen trotzdem erweitert werden, nämlich durch Überlagerung von Seltenerdmetall-Emissionsbanden mit dem Emissionsspektrum von NIR-aktivem Bi. Gemäß einer bevorzugten Ausführungsform der vorliegenden Erfindung werden die Matrizes sowohl mit Neodym als auch mit Ytterbium dotiert, wodurch sich das kurzwellige Ende der Emissionsbande durch Überlagerung mit den Nd- und Yb-Emissionsbanden noch weiter in den kurzwelligen Bereich erweitert. Außerdem wird durch diese Dotierung eine Anregung der Bi-Emission über die Nd- und Yb-Absorptionsbanden möglich. Insbesondere ist durch eine Dotierung mit Nd und Yb eine Erweiterung der Lumineszenzemission in den kurzwelligen Nahinfrarotbereich bis zu Wellenlängen von etwa 850 nm erreichbar. Umgekehrt wird gemäß einer weiteren bevorzugten Ausführungsform der vorliegenden Erfindung durch eine Dotierung mit Thulium und Holmium das langwellige Ende der Emissionsbande durch Überlagerung mit den Tm- und Ho-Emissionsbanden noch weiter in den langwelligen Bereich hinein erweitert. So kann eine Dotierung mit Tm und Ho dazu verwendet werden, eine Erweiterung der Lumineszenzemission in den langwelligen Nahinfrarotbereich bis zu Wellenlängen von über 2 µm zu erreichen.

Seltenerdmetalloxide sollten in Anteilen von maximal 15 Mol% (Seltenerdmetalloxide insgesamt) des Matrixmaterials enthalten sein. Bei höheren Anteilen kann Konzentrationsquenching die Lumineszenz beeinträchtigen. Außerdem sollte der Zusatz bestimmter Seltenerdmetalle, wie beispielsweise Cer, vermieden werden. Potentiell redox-aktive Substanzen wie Cer können die Bildung von NIR-aktivem Bi verhindern.

Weitere bevorzugte Nebenbestandteile, die die Lumineszenzintensität von NIR-aktivem Bi verbessern, sind TiO₂ und ZrO₂, die bevorzugt in Mengenanteilen von bis zu jeweils 5 Mol% des Matrixmaterials enthalten sein können. In Mengenanteilen von jeweils bevorzugt weniger als 1 Mol% des Matrixmaterials können As₂O₃, Sb₂O₃, SnO₂ und Fe₂O₃ enthalten sein. Diese Metalle verhindern eine Reduktion oder Oxidation von NIR-aktivem Bi bzw. fördern seine Entstehung. Gleiches gilt für Al₂O₃, das insbesondere in Silicatgläsern die Entstehung von NIR-aktivem Bi fördert. Aluminiumoxid kann in deutlich höheren Mengen enthalten sein, bevorzugt in Mengenanteilen von etwa 10 bis 30 Mol% des Matrixmaterials.

Bismut wird bei der vorliegenden Erfindung in einem Mengenanteil von, bezogen auf Bi₂O₃, 0,01 bis 10 Mol%, bevorzugt 0,5 bis 5 Mol%, des Lumineszenzstandards (Bismut plus Matrixmaterial) verwendet.

Die Ausgangsmaterialien zur Herstellung des erfindungsgemäßen Lumineszenzstandards sind im Prinzip nicht in irgendeiner Weise beschränkt, jedoch werden bevorzugt Oxide und Carbonate bzw. Gemische davon verwendet. Dies ist bedingt durch die leichte Verfügbarkeit bzw. Verarbeitbarkeit dieser Substanzen.

Ein besonders bevorzugter spektraler Lumineszenzstandard gemäß der vorliegenden Erfindung weist NIR-aktives Bi in einer Glasmatrix auf, wobei der Lumineszenzstandard 1 bis 3 Mol% Bi₂O₃, 75 bis 90 Mol% SiO₂, 10 bis 20 Mol% Al₂O₃, 0,1 bis 0,5 Mol% Nd₂O₃ und 1 bis 5 Mol% Yb₂O₃ enthält.

Die angegebenen chemischen Formeln zu den Bestandteilen des Lumineszenzstandards beziehen sich auf die Ausgangsmaterialien zur Herstellung des Lumineszenzstandards. Insbesondere wird der Bestandteil Bi₂O₃ als Ausgangsmaterial zur Herstellung des Lumineszenzstandards verwendet. Durch den Herstellungsprozess des Lumineszenzstandards entsteht aus dem Bi₂O₃ zumindest teilweise die NIR-aktive Bi-Spezies. Bei dem fertig gestellten Lumineszenzstandard ist das aus dem Bi₂O₃ stammende Bi zumindest teilweise in die im Nahinfrarot emittierende NIR-aktive Bi-Spezies umgewandelt.

Vorstehend wurden oxidische Matrixmaterialien wie Oxid-Gläser beschrieben. Es wird jedoch ausdrücklich darauf hingewiesen, dass die Matrixmaterialien keineswegs oxidischer Natur zu sein brauchen. Vielmehr sind auch andere anorganische Matrizes zur Stabilisierung von NIR-aktivem Bi geeignet, insbesondere Sulfidgläser.

Ferner kommen nicht nur Gläser als Matrixmaterialien in Frage, sondern auch teilkristalline Matrizes und kristalline Matrizes wie beispielsweise Glaskeramiken und Mineralien. Bevorzugte mineralische Matrizes für die vorliegende Erfindung sind Zinkspinell (ZnFe₂O₄), Cäsiumiodid (CsI) und Bariumdiphosphat (Ba₂P₂O₇).

Bevorzugt können auch kristalline, poröse Matrixmaterialien (Ionenaustauscher), wie Zeolithe und Schichtsilikate, mit Bi³⁺-Kationen beladen werden, und dann bei erhöhten Temperaturen durch Bildung der NIR-Bi-Spezies aktiviert werden. Hierbei wird die kristalline Struktur jedoch üblicherweise zerstört und es entstehen ähnliche Produkte wie bei einer Glasschmelze.

Zur Herstellung eines erfindungsgemäßen spektralen Lumineszenzstandards werden die Ausgangsmaterialien, beispielsweise Oxide (gegebenenfalls in Kombination mit Carbonaten) zur Glasherstellung oder Mineralien in Pulverform gut vermischt, gegebenenfalls unter Zusatz von etwas Wasser kompaktiert, erneut gut gemischt und getrocknet. Werden amorphisierbare anorganische Ionenaustauschermaterialien wie Zeolithe und/ oder Schichtsilikate als Ausgangsmaterialien für die Matrix verwendet, wird Bismut nicht in Form eines Oxids, Carbonats etc. in Pulverform zugegeben, sondern es wird zuerst mit einem geeigneten Bismutsalz ein Ionenaustausch durchgeführt, d.h. der Matrix-Vorläufer mit Bismut-Kationen in der gewünschten Menge befüllt. Der befüllte Ionenaustauscher wird dann gewaschen, getrocknet, gegebenenfalls weiter zerkleinert, und wie die in Pulverform gewünschten Ausgangsmaterialien kompaktiert und getrocknet. Die Trocknung erfolgt bevorzugt bei einer Temperatur von etwa 40 bis 80°C für etwa 10 bis 15 Stunden. Anschließend wird das homogene Gemisch in einem geeigneten Tiegel geglüht, beispielsweise in einem Korundtiegel oder einem Platintiegel. Zur Entstehung von NIR-aktivem Bi sind relativ hohe Glühtemperaturen der Ausgangsmaterialien erforderlich. Bei Verwendung eines Korundtiegels ist zu beachten, dass unter Umständen eine Reaktion mit dem Tiegelmaterial stattfinden kann, welche die endgültige Zusammensetzung bzw. den Aluminiumgehalt des Produkts beeinflusst. Die erforderlichen Glühtemperaturen hängen davon ab, ob unter Schutzgas (beispielsweise Stickstoff oder Argon) oder an Luft gearbeitet wird. Beim Erhitzen unter Schutzgasatmosphäre kann schon eine Temperatur von etwa 900°C für die Erzeugung von NIR-aktivem Bi ausreichend sein, während beim Erhitzen an Luft Temperaturen von etwa 1300°C bis 1800°C benötigt werden. Erfindungsgemäß wird bevorzugt an Luft gearbeitet.

Das Ausgangsmaterialgemisch wird langsam (Aufheizgeschwindigkeit etwa 2°C bis 4°C pro Minute) auf die gewünschte Endtemperatur aufgeheizt, mindestens etwa 3 Stunden, bevorzugt mindestens etwa 4 Stunden, bei dieser Temperatur gehalten und dann wieder langsam auf Raumtemperatur abgekühlt. Die Abkühlgeschwindigkeit beträgt bevorzugt etwa 1°C bis 3°C pro Minute.

Bei dem Glühprozess wird je nach Ausgangsmaterialien und Glühbedingungen eine Glasschmelze oder ein Sinterkörper erhalten. Mineralien wie beispielsweise Zeolithe ergeben oft Sinterkörper, die durch die hohen Temperaturen amorphisiert sind. Das abgekühlte Glas bzw. der abgekühlte Sinterkörper wird nun auf eine geeignete Partikelgröße zerkleinert, wobei zur Verwendung in den erfindungsgemäßen Kalibriermedien in Flachmaterialform Partikelgrößen von weniger als 50 µm bevorzugt sind. Die Zerkleinerung kann beispielsweise durch trockenes Vermahlen oder Nassvermahlung in einer Mühle erfolgen. Die Zerkleinerung hat den zusätzlichen Vorteil, dass räumlich spektral leicht inhomogene Produkte homogenisiert werden. Eine hohe räumliche Homogenität ist bei Lumineszenzstandards in Form eines durchgängigen Glaskörpers oft schwer zu erreichen. Der Lumineszenzstandard wird erfindungsgemäß bevorzugt zu einem Pulver mit einer Korngröße von unter 20 µm zerkleinert. Diese geringe Korngröße garantiert eine besonders gute spektrale Homogenität sowie Inkorporierbarkeit in erfindungsgemäße Kalibriermedien.

Eine Glühung bei erhöhter Temperatur ist die bevorzugte Herstellungsmethode der NIR-aktiven Bismuth-Spezies. Es ist jedoch auch möglich, die NIR-aktive Bi-Spezies durch Bestrahlung von Bismuth enthaltenden Matrizen mit Gammastrahlung oder energiereicher Elektronenstrahlung zu erzeugen. Hierdurch kann die NIR-aktive Bi-Spezies auch bei Raumtemperatur gebildet werden. Erhöhte Temperaturen sind dann unnötig bzw. können durch Rückbildung der gebildeten Spezies sogar störend wirken.

Im Stand der Technik sind Lumineszenzstandards in Form von Glasscheiben mit definierter Dicke, in Form von Pulvern, in Form von Pulverzugaben zu Lackformulierungen und Polymeren, etc. bekannt. Der erfindungsgemäße Lumineszenzstandard kann natürlich in diesen Formen eingesetzt werden, aber sein besonderer Vorteil liegt unter anderem darin, dass er hervorragend zur Verwendung in oder auf blattförmigen Kalibriermedien geeignet ist. Blattförmige Kalibriermedien werden, wie vorstehend erwähnt, zum Kalibrieren von Lumineszenzsensoren und Lumineszenzprüfgeräten in Papiermaschinen und Blattgutbearbeitungsmaschinen benötigt, wobei insbesondere spektrale Kalibriermedien für den NIR-Bereich benötigt werden. Der erfindungsgemäße Lumineszenzstandard mit NIR-aktivem Bi in einem anorganischen Matrixmaterial ist für diese Zwecke hervorragend geeignet.

Erfindungsgemäße Kalibriermedien (Lumineszenzstandard plus Träger) weisen ein Träger-Flachmaterial aus Papier oder Kunststoff oder beidem auf. Die Träger-Flachmaterialien haben eine Dicke im Bereich von bevorzugt etwa 50 bis 300 µm, besonders bevorzugt etwa 100 µm. Der erfindungsgemäße Lumineszenzstandard ist entweder in das Volumen des Trägermaterials inkorporiert oder stellt eine Beschichtung auf einer oder auf beiden Oberflächen des Trägermaterials dar. Wenn der Lumineszenzstandard in das Volumen des Trägermaterials inkorporiert ist, sollte das Trägermaterial nicht oder nur schwach absorbierend sein, d.h. es muss zumindest für die Lumineszenzemission des NIR-aktiven Bi und die Anregungswellenlängen ausreichend durchlässig sein um eine gut detektierbare Lumineszenzemission zu ermöglichen. Die in das Volumen des Trägermaterials inkorporierte Menge an Lumineszenzstandard liegt bevorzugt im Bereich von etwa 1 bis 20 Gew.-% des Trägermaterials, besonders bevorzugt bei etwa 5 Gew.-% des Trägermaterials. Wird der Lumineszenzstandard in Form einer Druckfarbe oder Tintenzusammensetzung oder ähnlichen flüssigen Zusammensetzung auf eine Oberfläche des Trägermaterials aufgetragen, um eine Beschichtung zu bilden, so gelten für die trockene Beschichtung vergleichbare Mengen an Lumineszenzstandard, d.h. der Anteil des Lumineszenzstandards bezogen auf das Trägermaterial beträgt dann bevorzugt etwa 1 bis 10 Gew.-% (konzentriert an der Oberfläche des Trägermaterials).

Die erfindungsgemäßen Kalibriermedien haben z.B. die Form eines Blattes einer definierten Größe, beispielsweise der Größe eines auf einer Blattgutbearbeitungsmaschine zu überprüfenden Wertdokumentes. Das Blatt definierter Größe kann auch dafür vorgesehen sein, auf einen Blatt-Träger befestigt zu werden, was die Handhabung des Kalibriermediums erleichtern kann. Bei einem Blatt einer definierten Größe kann sich der Lumineszenzstandard, in das Volumen des Trägermaterials integriert oder als Beschichtung auf einer Oberfläche, über die gesamte Fläche des Blatts oder nur über einen bestimmten Bereich davon erstrecken. Das Blatt kann zusätzlich Angaben über den zu detektierenden Lumineszenz-Sollwert des Lumineszenzstandards enthalten, wobei diese Angaben durch die räumliche Anordnung des Lumineszenzstandards, beispielsweise in Form eines Barcodes, bereitgestellt werden können. Die Lumineszenzsollwert-Angaben können natürlich auch in anderer Form bereitgestellt werden, beispielsweise als separater Barcode neben oder auf dem Lumineszenzstandard-Flächenbereich.

Das Kalibriermedium kann den Lumineszenzstandard auch in einer räumlichen Anordnung aufweisen, die es erlaubt, Fehllagen bei der Positionierung des Kalibriermediums zu korrigieren, wie es in der DE 10 2008 048 043 A1 angegeben ist, auf deren diesbezüglichen Offenbarungsgehalt hiermit Bezug genommen wird. Ferner kann ein erfindungsgemäßes Kalibriermedium für weitere Kalibrierungen genutzt werden und entsprechende weitere Standards aufweisen, wie beispielsweise Wellenlängenstandards, Standards für andere optische Sensoren oder Prüfgeräte oder Standards zur Kalibrierung von Sensoren oder Prüfgeräten für andere Sicherheitsmerkmale wie magnetischer Sicherheitsmerkmale oder anderer.

Die Erfindung wird nachfolgend anhand von Figuren noch weiter veranschaulicht. Es wird darauf hingewiesen, dass die Figuren nicht maßstabsgetreu und nicht proportionsgetreu sind. Außerdem sind jeweils nur die zum Verständnis der vorliegenden Erfindung wesentlichen Merkmale dargestellt. Es versteht sich, dass zusätzliche Merkmale vorhanden sein können bzw. dass die dargestellten Merkmale auch in anderen Kombinationen als in einer speziellen Figur dargestellt zur Anwendung kommen können. Gleiche Bezugsziffern bezeichnen jeweils gleiche oder entsprechende Elemente. Es zeigen:
- Figur 1: ein Emissionsspektrum eines erfindungsgemäßen spektralen Lumineszenzstandards, und
- Figuren 2 bis 5: jeweils schematische Darstellungen verschiedener Ausführungsformen eines erfindungsgemäßen Kalibriermediums.

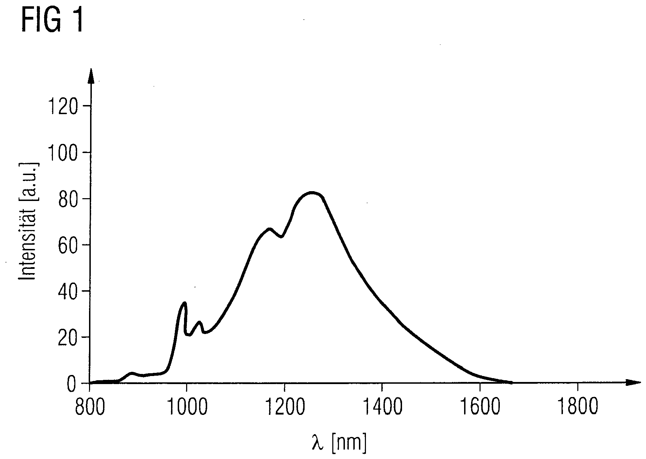

Figur 1 zeigt das Emissionsspektrum des Lumineszenzstandards gemäß einem ersten Ausführungsbeispiel, der aus einem Glas der Zusammensetzung von (Bi₂O₃)_{1,55}(Al₂O₃)_{14,2}(SiO₂)_{84,3}(Nd₂O₃)_{0,159}(Yb₂O₃)_{3,18} erhalten wurde. Der Lumineszenzstandard ist in einem Papier-Trägermedium enthalten. Der erfindungsgemäße spektrale Lumineszenzstandard wurde folgendermaßen hergestellt: 8,46g Bi₂O₃, 0,626g Nd₂O₃ und 14,67g Yb₂O₃ wurden im Mörser vorhomogenisiert. Es wurden 59,30g SiO₂ (Evonik GmbH, Sipernat 50S) und 16,95g Al₂O₃ (Sigma-Aldrich, 4N nanopowder) zugegeben und alle Komponenten gut vermischt, dann durch Zugabe von Wasser das Pulver kompaktiert, erneut vermischt, und das Gemisch bei 60°C für 12h getrocknet. Das getrocknete Gemisch wurde in einem Korundtiegel mit einer Rampe von 3°C/min auf 1600°C erhitzt, 4 h bei 1600°C gehalten, und dann mit einer Rampe von 2°C/min wieder auf Raumtemperatur gebracht.

Das dabei erhaltene rot-violette Glas wurde grob zerstoßen, und dann 120 Minuten lang in einer Achatmühle trocken vermahlen, um ein Glaspulver mit einer mittleren Korngröße D99 = 20 µm erhalten. Zur Herstellung eines erfindungsgemäßen Kalibriermediums wurde dieses Pulver einer Zellulose-Papiermasse in einer solchen Menge zugefügt, dass bei der Blattherstellung in dem endgültigen Papier der Dicke 100 µm ein relativer Massenanteil an spektralem Lumineszenzstandard von 5 Gew.-% erreicht wurde. Der erfindungsgemäße Lumineszenzstandard wird insbesondere über die Absorptionsbanden von Nd angeregt, z.B. mit einer Wellenlänge von 595 nm, und das blattförmige Kalibriermedium weist das in Figur 1 dargestellte Emissionsspektrum auf. Die Intensität der Emission ist in willkürlichen Einheiten (a. u.) angegeben, und es ist ersichtlich, dass die Emissionen bereits bei Wellenlängen unter 900 nm beginnen und erst im Bereich über 1600 nm enden. Für eine Kalibrierung nutzbare Emissionsintensitäten befinden sich im Wellenlängenbereich zwischen 900 und 1600 nm.

Die Intensität des Spektrums wurde an 2400 unterschiedlichen Stellen der Blattprobe mit einem Messfleck der Größe 1 mm² gemessen. Dabei wurde eine geringe Standardabweichung von 7% des Mittelwerts ermittelt. Das blattförmige, flexible Kalibriermedium weist daher eine hohe Homogenität auf.

Gemäß einem zweiten Ausführungsbeispiel wird der Lumineszenzstandard auf Basis eines Germanat-Glases hergestellt. Geeignete Mengenbereiche sind insbesondere 1-2 Bi₂O₃; 3-20 Al₂O₃; 80-96 GeO₂ (alle Angaben in mol%). Der Lumineszenzstandard wird z.B. aus einem Glas der Zusammensetzung (Bi₂O₃)_{0.9}(Al₂O₃)₆(GeO₂)_{93.1} erhalten. Zu dessen Herstellung wurden 3.89g Bi₂O₃, 5.68g Al₂O₃ und 90.4g GeO₂ im Mörser homogenisiert. Dann wurde durch Zugabe von Wasser das Pulver kompaktiert, erneut vermischt, und das Gemisch bei 60°C für 12h getrocknet. Das getrocknete Gemisch wurde in einem Korundtiegel mit einer Rampe von 3°C/min auf 1600°C erhitzt, 4 h bei 1600°C gehalten, und dann mit einer Rampe von 2°C/min wieder auf Raumtemperatur gebracht. Das erhaltene Material wurde grob zerstoßen und in einer Achatmühle trocken vermahlen bis ein Glaspulver mit einer mittleren Korngröße D99 unter 20µm erhalten wird. Zur Herstellung eines erfindungsgemäßen Kalibriermediums wurde dieses Pulver einer Zellulose-Papiermasse in einer solchen Menge zugefügt, dass bei der Blattherstellung in dem endgültigen Papier der Dicke 100 µm ein relativer Massenanteil an spektralem Lumineszenzstandard von 7 Gew.-% erreicht wurde. Der erfindungsgemäße Lumineszenzstandard kann unter anderem über die Absorptionsbanden der NIR-aktiven Bi-Spezies angeregt werden, beispielsweise bei 500 nm. Die breitbandige Emission beginnt bereits bei Wellenlängen unter 1000 nm und endet im Bereich über 1600 nm. Für eine Kalibrierung nutzbare Emissionsintensitäten befinden sich im Wellenlängenbereich zwischen 1000 nm und 1600 nm.

Gemäß einem dritten Ausführungsbeispiel wird der Lumineszenzstandard auf Basis eines Phosphat-Glases hergestellt. Geeignete Mengenbereiche sind insbesondere 0.5-2 Bi₂O₃; 10-25 Al₂O₃; 70-90 P₂O₅; 1-3 Yb₂O₃ (alle Angaben in mol%). Der Lumineszenzstandard wird z.B. aus einem Glas der Zusammensetzung (Bi₂O₃)_{1.2}(Al₂O3)₂O(P₂O₅)_{76.8}(Yb₂O₃)₂ erhalten. Zur Herstellung wurden 2.65g Bi₂O₃, 9.69g Al₂O₃, 83.9g NH₄H₂PO₄, 3.74g Y₂O₃ und 2g Aktivkohle (zur Einstellung der Glühatmosphäre) im Mörser homogenisiert. Das Gemisch wurde in einem Korundtiegel mit einer Rampe von 3°C/min auf 1600°C erhitzt, 4 h bei 1600°C gehalten, und dann mit einer Rampe von 2°C/min wieder auf Raumtemperatur gebracht. Das erhaltene Material wurde grob zerstoßen und in einer Achatmühle trocken vermahlen bis ein Glaspulver mit einer mittleren Korngröße D99 unter 20µm erhalten wird. Zur Herstellung eines erfindungsgemäßen Kalibriermediums wurde dieses Pulver einer Zellulose-Papiermasse in einer solchen Menge zugefügt, dass bei der Blattherstellung in dem endgültigen Papier der Dicke 100 µm ein relativer Massenanteil an spektralem Lumineszenzstandard von 6 Gew.-% erreicht wurde. Der erfindungsgemäße Lumineszenzstandard wird unter anderem über die Absorptionsbanden des Yb angeregt, beispielsweise bei 980 nm. Die breitbandige Emission beginnt bereits bei Wellenlängen unter 1000 nm und endet im Bereich über 1500 nm. Für eine Kalibrierung nutzbare Emissionsintensitäten befinden sich im Wellenlängenbereich zwischen 1000 und 1500 nm.

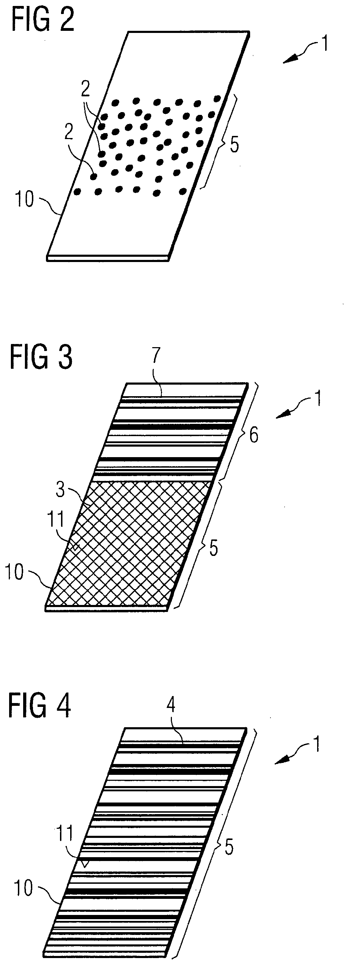

Figur 2 zeigt eine schematische Darstellung einer Ausführungsform eines erfindungsgemäßen Kalibriermediums 1. Das Kalibriermedium 1 weist ein blattförmiges Trägermaterial 10 auf, beispielsweise aus einem Papier. Das Trägermaterial 10 kann alternativ natürlich aus einem Kunststoff bestehen, und es kann einlagig oder mehrlagig sein. In das Volumen des Trägermaterials 10 integriert befinden sich Partikel 2 des erfindungsgemäßen spektralen Lumineszenzstandards. In der dargestellten Ausführungsform befinden sich die Lumineszenzstandard-Partikel 2 nur in einem Teilbereich 5 des Trägermaterials 10, während in den übrigen Bereichen Platz für eventuelle weitere Standards und/ oder Sollwertangaben ist. Es versteht sich, dass das Trägermaterial 10 zumindest für Wellenlängen in dem Bereich der Anregungswellenlängen sowie der Emissionswellenlängen des Lumineszenzstandards hinreichend durchlässig sein muss, um eine angemessene Anregung des Lumineszenzstandards sowie eine angemessene Detektierbarkeit der Emissionen zu gewährleisten.

Figur 3 zeigt eine alternative Ausführungsform eines erfindungsgemäßen Kalibriermediums. Hier weist das Trägermaterial 10 in einem Teilbereich 5 seiner ersten Oberfläche 11 eine Beschichtung 3 aus einem erfindungsgemäßen Lumineszenzstandard auf. Zur Herstellung der Beschichtung 3 wird der erfindungsgemäße spektrale Lumineszenzstandard beispielsweise in feinpulvriger Form in einem Trägermedium suspendiert und auf das Trägermaterial 10 aufgedruckt. In dem Bereich 6 der ersten Oberfläche 11 des Trägermaterials 10 ist mit einer konventionellen Druckfarbe ein Barcode 7 aufgedruckt. Der Barcode 7 gibt den in dem Bereich 5 zu detektierenden Lumineszenz-Sollwert des Lumineszenzstandards an. Die Beschichtung 3 und der Barcode 7 können auch auf beiden Oberflächen des Trägermaterials 10 vorgesehen werden.

Figur 4 zeigt eine weitere alternative Ausführungsform eines erfindungsgemäßen Kalibriermediums 1. Bei dieser Ausführungsform weist das Trägermaterial 10 auf seiner gesamten ersten Oberfläche 11 einen Barcode 4 auf, der aus einem Aufdruck des erfindungsgemäßen spektralen Lumineszenzstandards besteht. Der Lumineszenzstandard wird zu diesem Zweck wiederum als Tinte oder Druckfarbe zubereitet und aufgedruckt. Der Barcode 4 liefert in diesem Fall gleichzeitig das Emissionsspektrum zum Kalibrieren eines Prüfgeräts wie auch die Angabe des zu detektierenden Sollwerts. Es versteht sich, dass der Aufdruck 4 auch an beiden Oberflächen des Trägermaterials 10 vorgesehen werden kann, um eine gleichzeitige Kalibrierung von Sensoren oder Prüfgeräten, die einander gegenüberliegend angeordnet sind, zu erlauben. Eine derartige gegenüberliegende Anordnung findet sich oft in Blattgutbearbeitungsmaschinen, um gleichzeitig beide Oberflächen einer Banknote oder eines anderen Wertdokuments prüfen zu können. Selbstverständlich muss sich der Barcode 4 nicht, wie in Figur 4 dargestellt, jeweils über eine vollständige Oberfläche des Trägermaterials 10 erstrecken, sondern kann auch nur Teilbereiche einer Oberfläche bedecken.

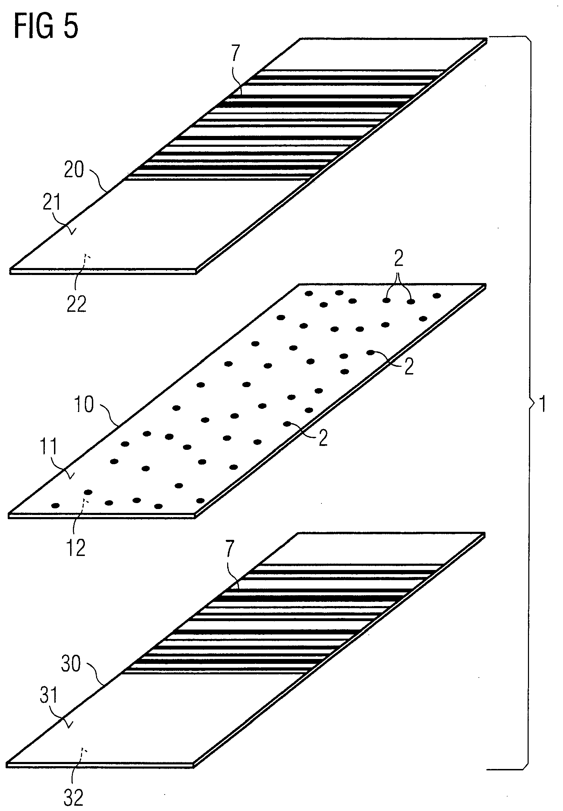

Figur 5 zeigt eine weitere alternative Ausführungsform eines erfindungsgemäßen Kalibriermediums 1. Bei dieser Ausführungsform besteht das Kalibriermedium 1 aus einem blattförmigen Trägermaterial 10, in dessen Volumen Lumineszenzstandard-Partikel 2 inkorporiert sind. Bei der hier dargestellten Ausführungsform befinden sich im gesamten Volumen des Trägermaterials 10 Lumineszenzstandard-Partikel 2. Das Trägermaterial 10 ist zumindest für Wellenlängen in dem Bereich der Anregungswellenlängen sowie der Emissionswellenlängen des Lumineszenzstandards hinreichend durchlässig, um eine angemessene Anregung des Lumineszenzstandards sowie eine angemessene Detektierbarkeit der Emissionen zu gewährleisten. Beispielsweise kann ein Trägermaterial 10 aus Papier oder Kunststoff verwendet werden, das zwar lichtstreuend, aber auch genügend lichtdurchlässig ist.

Das Kalibriermedium 1 weist zwei weitere Trägermaterialien 20, 30, z.B. Kunststofffolien, mit denselben Abmessungen wie das Trägermaterial 10 auf. Das Trägermaterial 20 hat eine erste Oberfläche 21 und eine zweite Oberfläche 22, und wird an der zweiten Oberfläche 22 mit der ersten Oberfläche 11 des Trägermaterials 10 verbunden, beispielsweise verklebt. Das Trägermaterial 30 hat eine erste Oberfläche 31 und eine zweite Oberfläche 32, und wird an der ersten Oberfläche 31 mit der zweiten Oberfläche 12 des Trägermaterials 10 verbunden, beispielsweise verklebt. An der ersten Oberfläche 21 des Trägermaterials 20 sowie an der zweiten Oberfläche 32 des Trägermaterials 30 befinden sich jeweils Aufdrucke 7 in Form von Barcodes, die den von einem Lumineszenzprüfgerät zu detektierenden Sollwert des erfindungsgemäßen Lumineszenzstandards angeben. Die Trägermaterialien 20, 30 sind jeweils für Anregungsstrahlung und Emissionsstrahlung des Lumineszenzstandards ansonsten lichtdurchlässig, z.B. transparent. Der Sollwert-Barcodeaufdruck 7 ist, zumindest für die Emissionsstrahlung des Lumineszenzstandards, jedoch nicht lichtdurchlässig, sondern lichtabsorbierend. Selbstverständlich sind auch eventuell verwendete Klebstoffe nicht oder nur schwach absorbierend.

Wird nun das Kalibriermedium 1 an einem oder an zwei einander gegenüberliegenden Lumineszenzsensoren oder Lumineszenz-Prüfgeräten, vorbeigeführt, so detektieren die Sensoren bzw. Prüfgeräte beim Abtasten des Kalibriermediums 1 eine Vielzahl von Kalibrier-Messwerten. Im Fall des Kalibriermediums aus Figur 5 können diese Messwerte jedoch nur in den Barcode-Zwischenräumen detektiert werden, da die Barcode-Streifen selbst das von dem Lumineszenzstandard emittierte Licht absorbieren, sofern sie überhaupt eine Anregung des Lumineszenzstandards zugelassen haben. Der Barcode sorgt also für eine Modulation der durch die Sensoren bzw. durch die Prüfgeräte detektierten Messwerte. Diese Modulation wird durch die Sensoren bzw. Prüfgeräte dekodiert, um einen oder mehrere für die Kalibrierung benötigte Sollwerte zu ermitteln, die dem Kalibriermedium 1 zugeordnet sind. Im Fall des Kalibriermediums aus Figur 4 werden die Kalibrier-Messwerte umgekehrt nur auf den Balken des Barcodes 4 detektiert.

Die dargestellten Ausführungsformen des erfindungsgemäßen Kalibriermediums als flexibles Blatt, das den erfindungsgemäßen spektralen Lumineszenzstandard in seinem Volumen oder als Aufdruck auf einer Oberfläche aufweist, stellen die bevorzugten Ausführungsformen der vorliegenden Erfindung dar, da sie besonders geeignet sind zum Testen der Funktionsfähigkeit spektral breitbandiger Sensorik von Papierprüfmaschinen für Spezialpapier. Blattförmige Kalibriermedien können wie die zu prüfenden Papiere selbst in die Prüfmaschinen eingeführt werden, beispielsweise über die Transportrollen der Prüfmaschinen. In fein zerkleinerter Form in oder auf einem blattförmigen Trägermaterial verteilt weisen die erfindungsgemäßen spektralen Lumineszenzstandardmaterialien auch eine besonders hohe Homogenität auf. Weitere Vorteile der erfindungsgemäßen Lumineszenzstandards bzw. Kalibriermedien mit den erfindungsgemäßen Lumineszenzstandards sind die hohe chemische Stabilität, Langzeit-Lagerstabilität und Lichtechtheit der Lumineszenzstandards.

## Patentansprüche

1. Spektraler Lumineszenzstandard, der Bismut in einem lichtdurchlässigen, insbesondere optisch transparenten, anorganischen Matrixmaterial aufweist, wobei der Lumineszenzstandard, bei Bestrahlung mit Anregungslicht, Licht im Nahinfrarotbereich emittiert, und Bismut als Lumineszenzemitter im Nahinfrarotbereich wirkt, wobei die Lichtemission des Lumineszenzstandards im Nahinfrarotbereich bei Wellenlängen unter 1000 nm beginnt und im Bereich über 1500 nm endet.

2. Spektraler Lumineszenzstandard nach Anspruch 1, **dadurch gekennzeichnet, dass** das anorganische Matrixmaterial ein Glas ist, insbesondere ein Silicatglas, ein Alumosilicatglas, ein Borosilicatglas, ein Boratglas, ein Phosphatglas, ein Germanatglas oder ein Sulfidglas.

3. Spektraler Lumineszenzstandard nach Anspruch 1 oder 2, **dadurch gekennzeichnet, dass** das anorganische Matrixmaterial mindestens ein Alkalimetall und/ oder mindestens ein Erdalkalimetall zur Steigerung der Lumineszenzintensität aufweist.

4. Spektraler Lumineszenzstandard nach einem der Ansprüche 1 bis 3, **dadurch gekennzeichnet, dass** das anorganische Matrixmaterial mit mindestens einem Seltenerdmetall, ausgenommen Cer, dotiert ist, insbesondere dass das anorganische Matrixmaterial mit Neodym und Ytterbium dotiert ist.

5. Spektraler Lumineszenzstandard nach einem der Ansprüche 1 bis 4, **dadurch gekennzeichnet, dass** das anorganische Matrixmaterial Silizium, Aluminium, Bismut, Neodym, Ytterbium und optional Alkalimetalle und/ oder Erdalkalimetalle in der Zusammensetzung, bezogen auf die Oxide, von 75 bis 90 Mol% SiO₂,10 bis 20 Mol% Al₂O₃, 1 bis 3 Mol% Bi₂O₃, 0,1 bis 0,5 Mol% Nd₂O₃, 1 bis 5 Mol% Yb₂O₃ aufweist.

6. Verwendung von Bismut in einem lichtdurchlässigen, insbesondere optisch transparenten, anorganischen Matrixmaterial als Lumineszenzstandard, der, bei Bestrahlung mit Anregungslicht, Licht im Nahinfrarotbereich emittiert, wobei Bismut als Lumineszenzemitter im Nahinfrarotbereich wirkt, wobei der Lumineszenzstandard insbesondere ein anorganisches Matrixmaterial gemäß einem der vorhergehenden Ansprüche aufweist.

7. Verfahren zur Herstellung eines spektralen Lumineszenzstandards, der Bismut in einem lichtdurchlässigen, insbesondere optisch transparenten, anorganischen Matrixmaterial aufweist, wobei der Lumineszenzstandard, bei Bestrahlung mit Anregungslicht, Licht im Nahinfrarotbereich emittiert und Bismut als Lumineszenzemitter im Nahinfrarotbereich wirkt, **gekennzeichnet durch** folgende Schritte:
- innig Vermischen einer anorganischen Bismut-Verbindung mit mindestens einem Matrixbildner zur Herstellung eines Bismut enthaltenden Gemisches, oder
Befüllen eines amorphisierbaren anorganischen Ionenaustauschermaterials mit Bismut-Kationen zur Herstellung eines Bismut enthaltenden Ionenaustauschers,
- Erhitzen des Bismut enthaltenden Gemisches oder des Bismut enthaltenden Ionenaustauschers unter Schutzgas bei 900 °C bis 1800 °C oder an Luft bei 1300 °C bis 1800 °C für mindestens 3 Stunden, bevorzugt mindestens 4 Stunden, und
- Abkühlen lassen der erhaltenen Schmelze oder des Sinterguts und Zerkleinern der abgekühlten Schmelze oder des Sinterguts zu einem Pulver einer Korngröße unter 50 µm, bevorzugt unter 20 µm.

8. Verfahren nach Anspruch 7, **dadurch gekennzeichnet, dass** die Bismut-Verbindung und die Matrixbildner als Oxide und/ oder Carbonate eingesetzt werden.

9. Verfahren nach Anspruch 7 oder 8, **dadurch gekennzeichnet, dass** dem Bismut enthaltenden Gemisch oder dem Bismut enthaltenden Ionenaustauscher mindestens ein Alkalimetall und/ oder mindestens ein Erdalkalimetall und/ oder mindestens ein Seltenerdmetall zugegeben wird, bevorzugt in Form eines Oxids, eines Carbonats, eines Sulfats oder eines Nitrats.

10. Kalibriermedium aufweisend
- einen spektralen Lumineszenzstandard nach einem der Ansprüche 1 bis 6, oder einen nach einem Verfahren gemäß einem der Ansprüche 7 bis 9 erhaltenen spektralen Lumineszenzstandard, und
- ein Trägermaterial (10) für den Lumineszenzstandard.

11. Kalibriermedium (1) nach Anspruch 10, **dadurch gekennzeichnet, dass** das Trägermaterial (10) blattförmig ist, und der spektrale Lumineszenzstandard im Volumen des Trägermaterials oder in einem Teilbereich des Volumens des Trägermaterials enthalten ist.

12. Kalibriermedium (1) nach Anspruch 10, **dadurch gekennzeichnet, dass** das Trägermaterial (10) blattförmig ist und der spektrale Lumineszenzstandard als vollflächige oder teilflächige Beschichtung (3) auf einer oder auf beiden Oberflächen des Trägermaterials (10) vorgesehen ist.

13. Kalibriermedium (1) nach einem der Ansprüche 10 bis 12, **dadurch gekennzeichnet, dass** das Kalibriermedium (1) Angaben zu dem zu detektierenden Lumineszenz-Sollwert des spektralen Lumineszenzstandards aufweist, wobei die Angaben insbesondere dadurch bereitgestellt werden, dass das Kalibriermedium einen Barcode aufweist, der eine dem Lumineszenz-Sollwert entsprechende Modulation der von dem Lumineszenzstandard detektierbaren Lumineszenzsignale bewirkt.

14. Kalibriermedium (1) nach Anspruch 13, **dadurch gekennzeichnet, dass** die Angaben zu dem zu detektierenden Lumineszenz-Sollwert, insbesondere der Barcode, durch die räumliche Anordnung des spektralen Lumineszenzstandards auf dem Trägermaterial (10) bereitgestellt werden.

15. Kalibriermedium (1) nach Anspruch 13, **dadurch gekennzeichnet, dass** es mindestens auf einer Oberfläche des Trägermaterials (10) ein weiteres blattförmiges Trägermaterial (20) aufweist, das für Anregungsstrahlung und Emissionsstrahlung des Lumineszenzstandards lichtdurchlässige Bereiche und lichtundurchlässige Bereiche hat, wobei die Angaben zu dem zu detektierenden Lumineszenz-Sollwert, insbesondere der Barcode, durch die räumliche Anordnung der lichtdurchlässigen und der lichtundurchlässigen Bereiche des weiteren blattförmigen Trägermaterials (20) bereitgestellt werden.

## Claims

1. A spectral luminescence standard which has bismuth in a light-transmissive, in particular optically transparent, inorganic matrix material, wherein the luminescence standard emits light in the near infrared region upon irradiation with excitation light and bismuth acts as a luminescence emitter in the near infrared region, wherein the light emission of the luminescence standard in the near infrared region begins at wavelengths below 1000 nm ends in the region above 1500 nm.

2. The spectral luminescence standard according to claim 1, **characterized in that** the inorganic matrix material is a glass, in particular a silicate class, an alumosilicate glass, a borosilicate glass, a borate glass, a phosphate glass, a germanate glass or a sulphide glass.

3. The spectral luminescence standard according to claim 1 or 2, **characterized in that** the inorganic matrix material has at least one alkaline metal and/or at least one alkaline-earth metal for increasing the luminescence intensity.

4. The spectral luminescence standard according to any of claims 1 to 3, **characterized in that** the inorganic matrix material is doped with at least one rare-earth metal, except for Cer, in particular that the inorganic matrix material is doped with neodymium and ytterbium.

5. The spectral luminescence standard according to any of claims 1 to 4, **characterized in that** the inorganic matrix material has silicon, aluminum, bismuth, neodymium, ytterbium and, optionally, alkaline metals and/or alkaline-earth metals in the composition, related to the oxides, of 75 to 90 mole% SiO₂, 10 to 20 mole% Al₂O₃, 1 to 3 mole% Bi₂O₃, 0.1 to 0.5 mole% Nd₂O₃, 1 to 5 mole% Yb₂O₃.

6. An employment of bismuth in a light-transmissive, in particular optically transparent, inorganic matrix material as a luminescence standard which emits light in the near infrared region upon irradiation with excitation light, wherein bismuth acts as a luminescence emitter in the near infrared region, wherein the luminescence standard has in particular an inorganic matrix material according to one of the preceding claims.

7. A method for manufacturing a spectral luminescence standard which has bismuth in a light-transmissive, in particular optically transparent, inorganic matrix material, wherein the luminescence standard emits light in the near infrared region upon irradiation with excitation light, and bismuth acts as a luminescence emitter in the near infrared region, **characterized by** the following steps:
- intimately mixing an inorganic bismuth compound with at least one matrix former for manufacturing a bismuth-containing mixture, or filling an amorphizable inorganic ion exchanger material with bismuth cations for manufacturing a bismuth-containing ion exchanger,
- heating the bismuth-containing mixture or the bismuth-containing ion exchanger under inert gas at 900°C to 1800°C or in air at 1300°C to 1800°C for at least 3 hours, preferably at least 4 hours, and
- leaving to cool down the obtained melt or the sintered product and comminuting the cooled-down melt or the sintered product to a powder of a grain size below 50 µm, preferably below 20 µm.

8. The method according to claim 7, **characterized in that** the bismuth compound and the matrix formers are used as oxides and/or carbonates.

9. The method according to claim 7 or 8, **characterized in that** to the bismuth-containing mixture or to the bismuth-containing ion exchanger at least one alkaline metal and/or at least one alkaline-earth metal and/or at least one rare-earth metal is added, preferably in the form of an oxide, of a carbonate, of a sulphate, or of a nitrate.

10. A calibration medium having
- a spectral luminescence standard according to any of claims 1 to 6, or a spectral luminescence standard obtained in accordance with a method according to any of claims 7 to 9, and
- a carrier material (10) for the luminescence standard.

11. The calibration medium (1) according to claim 10, **characterized in that** the carrier material (10) is sheet-shaped, and the spectral luminescence standard is contained in the volume of the carrier material or in a partial region of the volume of the carrier material.

12. The calibration medium (1) according to claim 10, **characterized in that** the carrier material (10) is sheet-shaped, and the spectral luminescence standard is provided as a coating (3) over the full area or over a partial area on one or on the two surfaces of the carrier material (10).

13. The calibration medium (1) according to any of claims 10 to 12, **characterized in that** the calibration medium (1) has specifications regarding the spectral luminescence standard's luminescence target-value to be detected, the specifications being made available in particular by the calibration medium having a barcode which effects a modulation of the luminescence signals detectable from the luminescence standard, the modulation corresponding to the luminescence target-value.

14. The calibration medium (1) according to claim 13, **characterized in that** the specifications regarding the luminescence target-value to be detected, in particular the barcode, are made available through the spatial arrangement of the spectral luminescence standard on the carrier material (10).

15. The calibration medium (1) according to claim 13, **characterized in that** it has at least on one surface of the carrier material (10) a further sheet-shaped carrier material (20), which has light-transmissive regions and light-non-transmissive regions for excitation radiation and emission radiation of the luminescence standard, wherein the specifications regarding the luminescence target-value to be detected, in particular the barcode, are made available through the spatial arrangement of the light-transmissive and the light-non-transmissive regions of the further sheet-shaped carrier material (20).

## Revendications

1. Etalon de luminescence spectral qui présente du bismuth dans un matériau matriciel inorganique translucide, en particulier optiquement transparent, cependant que l'étalon de luminescence, lors d'une irradiation avec de la lumière d'excitation, émet de la lumière dans le domaine du proche infrarouge, et que le bismuth agit comme émetteur de luminescence dans le domaine du proche infrarouge, cependant que l'émission de lumière de l'étalon de luminescence commence dans le domaine du proche infrarouge à des longueurs d'onde situées en-dessous de 1000 nm et se termine dans la plage située au-dessus de 1500 nm.

2. Etalon de luminescence spectral selon la revendication 1, **caractérisé en ce que** le matériau matriciel inorganique est un verre, en particulier un verre silicaté, un verre aluminosilicate, un verre borosilicate, un verre boraté, un verre phosphaté, un verre germanate ou un verre à base de sulfure.

3. Etalon de luminescence spectral selon la revendication 1 ou 2, **caractérisé en ce que** le matériau matriciel inorganique comporte au moins un métal alcalin et/ou au moins un métal alcalino-terreux pour l'augmentation de l'intensité de luminescence.

4. Etalon de luminescence spectral selon une des revendications de 1 à 3, **caractérisé en ce que** le matériau matriciel inorganique est dopé avec au moins un métal des terres rares à l'exception du cérium, en particulier **en ce que** le matériau matriciel inorganique est dopé au néodyme et à l'hytterbium.

5. Etalon de luminescence spectral selon une des revendications de 1 à 4, **caractérisé en ce que** le matériau matriciel inorganique comporte du silicium, de l'aluminium, du bismuth, du néodyme, de l'hytterbium et, en option, des métaux alcalins et/ou des métaux alcalino-terreux dans la composition qui est, relativement aux oxydes, de 75 à 90 moles pour cent de SiO₂, de 10 à 20 moles pour cent de Al₂O₃, e 1 à 3 moles pour cent de Bi₂O₃, de 0,1 à 0,5 moles pour cent de Nd₂O₃, de 1 à 5 moles pour cent de Yb₂O₃.

6. Utilisation de bismuth dans un matériau matriciel inorganique translucide, en particulier optiquement transparent comme étalon de luminescence spectral, lequel, lors d'une irradiation avec de la lumière d'excitation, émet de la lumière dans le domaine du proche infrarouge, cependant que le bismuth agit comme émetteur de luminescence dans le domaine du proche infrarouge, cependant que l'étalon de luminescence comporte en particulier un matériau matriciel inorganique selon une des revendications précédentes.

7. Procédé de fabrication d'un étalon de luminescence spectral qui comporte du bismuth dans un matériau matriciel inorganique translucide, en particulier optiquement transparent, cependant que l'étalon de luminescence, lors d'une irradiation avec de la lumière d'excitation, émet de la lumière dans le domaine du proche infrarouge, et que le bismuth agit comme émetteur de luminescence dans le domaine du proche infrarouge, **caractérisé par** les étapes suivantes :
- mélanger intimement un composé inorganique de bismuth avec au moins un formateur de matrice pour la fabrication d'un mélange contenant du bismuth, ou
remplir un matériau inorganique amorphisable échangeur d'ions avec des cations de bismuth pour la fabrication d'un échangeur d'ions contenant du bismuth,
- chauffer le mélange contenant du bismuth ou l'échangeur d'ions contenant du bismuth sous gaz protecteur à entre 900 °C et 1800 °C ou à l'air à entre 1300 °C et 1800 °C pour au moins 3 heures, de préférence pour au moins 4 heures, et
- laisser refroidir la masse fondue obtenue ou la matière frittée, et broyer la masse fondue obtenue ou la matière frittée de manière à obtenir une poudre d'une taille de grain située en-dessous de 50 µm, de préférence en-dessous de 20 µm.

8. Procédé selon la revendication 7, **caractérisé en ce que** le composé de bismuth et les formateurs de matrice sont mis en oeuvre en tant qu'oxydes et/ou carbonates.

9. Procédé selon la revendication 7 ou 8, **caractérisé en ce que**, au mélange contenant du bismuth ou à l'échangeur d'ions contenant du bismuth, au moins un métal alcalin et/ou au moins un métal alcalino-terreux et /ou au moins un métal des terres rares est ajouté, de préférence sous forme d'un oxyde, d'un carbonate, d'un sulfate ou d'un nitrate.

10. Milieu d'étalonnage comportant
- un étalon de luminescence spectral selon une des revendications de 1 à 6, ou un étalon de luminescence spectral obtenu suivant un procédé selon une des revendications de 7 à 9, et
- un matériau support (10) pour l'étalon de luminescence.

11. Milieu d'étalonnage (1) selon la revendication 10, **caractérisé en ce que** le matériau support (10) a une forme de feuille, et **en ce que** l'étalon de luminescence spectral est contenu dans le volume du matériau support ou dans une zone partielle du volume du matériau support.

12. Milieu d'étalonnage (1) selon la revendication 10, **caractérisé en ce que** le matériau support (10) a une forme de feuille, et **en ce que** l'étalon de luminescence spectral est prévu en tant que revêtement (3) à pleine surface ou à surface partielle sur une ou sur les deux surfaces du matériau support (10).

13. Milieu d'étalonnage (1) selon une des revendications de 10 à 12, **caractérisé en ce que** le milieu d'étalonnage (1) présente des indications sur la valeur de consigne de luminescence à détecter de l'étalon de luminescence spectral, cependant que les indications sont mises à disposition en particulier par le fait que le milieu d'étalonnage comporte un code-barres qui engendre une modulation, correspondant à la valeur de consigne de luminescence, des signaux de luminescence pouvant être détectés par l'étalon de luminescence.

14. Milieu d'étalonnage (1) selon la revendication 13, **caractérisé en ce que** les indications sur la valeur de consigne de luminescence à détecter, en particulier le code-barres, sont mises à disposition part l'agencement spatial de l'étalon de luminescence spectral sur le matériau support (10).

15. Milieu d'étalonnage (1) selon la revendication 13, **caractérisé en ce qu'**il comporte au moins sur une surface du matériau support (10) un autre matériau support (20) en forme de feuille qui a, pour du rayonnement d'excitation et du rayonnement d'émission de l'étalon de luminescence, des zones translucides et des zones opaques, cependant que les indications sur la valeur de consigne de luminescence à détecter, en particulier le code-barres, sont mises à disposition part l'agencement spatial des zones translucides et des zones opaques de l'autre matériau support (20) en forme de feuille.
